# EUROPEAN PATENT APPLICATION

(11) **EP 1 452 861 A2**
(43) Date of publication of application: **01.09.2004**
(21) Application number: 04001971.3
(22) Date of filing: 29.01.2004
(51) Int. Cl.: G01N 27/407

(54) **Gas concentration detecting apparatus**

(30) Priority: 30.01.2003 JP 2003022561; 19.12.2003 JP 2003422905
(71) Applicant: Denso Corporation, Kariya-city, Aichi-pref., 448-8661 (JP)
(72) Inventor: Suzuki, Toshiyuki, Kariya-city Aichi-pref. 448-8661 (JP); Kurokawa, Eiichi, Kariya-city Aichi-pref. 448-8661 (JP)
(74) Representative: Leson, Thomas Johannes Alois, Dipl.-Ing.

(57) **Abstract**

The present invention relates to a gas concentration detecting apparatus capable of implementing applied voltage to a gas sensor element with high accuracy to improve the gas concentration detection accuracy over a wide range. The sensor element of the gas concentration detecting apparatus acting as an air-fuel ratio sensor is composed of a gas diffusion rate-determining portion, a solid electrolyte and a pair of electrodes, and an element current corresponding to a specific component concentration flows whenever a voltage is applied to the sensor element. An applied voltage control circuit controls the applied voltage to the sensor element on the basis of an applied voltage characteristic defined linearly. The applied voltage characteristic is set on the basis of a width of a limiting current region at each air-fuel ratio in a wide air-fuel ratio detection range.

## Description

### BACKGROUND OF THE INVENTION

### 1) Field of the Invention

The present invention relates to a gas concentration detecting apparatus designed to detect a specific component concentration in a gas to be detected (which will hereinafter be referred to equally as a "detection gas").

### 2) Description of the Related Art

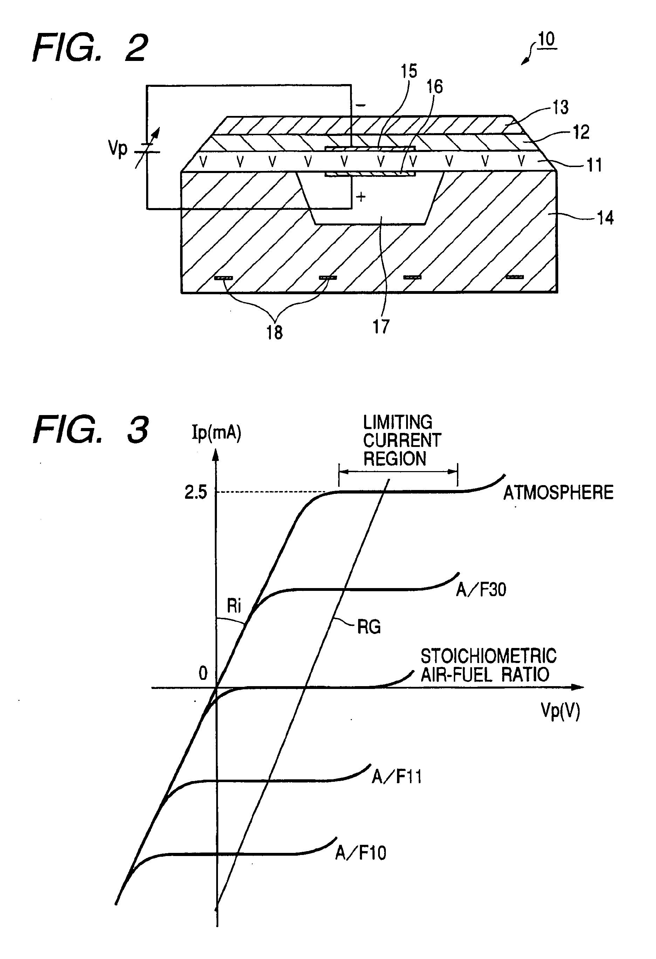

For example, so far, there has been known a limit-current type air-fuel ratio sensor (so-called an A/F sensor) made to detect an oxygen concentration (air-fuel ratio) in an exhaust gas emitted as a detection gas from a vehicle engine. That is, the A/F sensor includes a sensor element composed of a solid electrolyte and a pair of electrodes provided on the solid electrolyte, and it is made to generate a flow of an element current corresponding to an oxygen concentration whenever a voltage is applied to the sensor element. FIG. 3 is an illustration of an output characteristic of this A/F sensor. As seen from FIG. 3, a flat region parallel with a voltage axis, i.e., a limiting current region in which an element current Ip (limiting current) becomes constant, appears and this limiting current region shifts generally to a high-voltage side as the oxygen concentration increases.

In this case, for a precise detection of the air-fuel ratio, there is a need to correctly control a voltage Vp to be applied to the sensor element in the limiting current region, and in general, an applied voltage line (RG in FIG. 3) forming a linear line is set and the applied voltage Vp is determined on the applied voltage line RG on the basis of an element current Ip in each case. In this connection, in a case in which a voltage is applied to the sensor element beyond the limiting current region, there is a possibility that, if it strays toward the low-voltage side, the air-fuel ratio is recognized as a small value in error while, if straying toward the high-voltage side, damage to the solid electrolyte (zirconia ZrO₂) occurs.

On the other hand, in the case of the control of the applied voltage Vp in an applied voltage control circuit, if the gain on the circuit arrangement exceeds "1", the oscillation of the applied voltage Vp occurs, which can lead to adversely affecting the air-fuel ratio detection accuracy. That is, the oscillation of the applied voltage Vp occurs, for example, due to the facts that the applied voltage characteristic provides a positive feedback so that the applied voltage Vp increases with an increase in the element current Ip and that, if a radio-frequency component such as noise is introduced into the sensor, an impedance characteristic peculiar to the sensor varies the impedance value to increase the gain of the sensor element.

In order to solve this problem, there has been proposed a gas concentration detecting apparatus disclosed in, for example, Japanese Patent Laid-Open No. 2000-81413. In this gas concentration detecting apparatus, there have been proposed the techniques of the inclination of the applied voltage line RG being set to be greater than the inclination defined by an alternating-current impedance (that is, the applied voltage line is placed into a standing condition) or this applied voltage line RG being set to be parallel with the inclination stemming from an direct-current internal resistance Ri (so-called an inclination of a resistance governing region). This enables the gain to be below 1 in the entire feedback system including the applied voltage control circuit and the sensor, thus preventing the occurrence of the oscillation of the applied voltage. Incidentally, in general, the direct-current internal resistance and alternating-current impedance of the sensor element are in the relationship of "direct-current internal resistance > element impedance".

In recent years, for example, the enhancement of the exhaust gas regulations or abnormality detection regulations (OBD and others) on vehicles requires the expansion of the lean side of the air-fuel ratio detection range up to the atmospheric state. Moreover, the importance is on the increase in that, in terms of an NOx occlusion reduction type catalyst provided in an exhaust system, the rich combustion control is implemented with high accuracy to achieve the restoration of the NOx occlusion ability, the sulfur poisoning regeneration and others, and for the purpose of improving the fuel consumption, the rich combustion control at a high engine load is executed with high accuracy. In such situations, a strong request exists in that the air-fuel ratio detection range is enlarged to enable the air-fuel ratio detection over a wide range and the air-fuel ratio detection accuracy is increased in this detection range.

However, for enlarging the air-fuel ratio detection range as mentioned above, there is a problem in that the detection accuracy drops in the vicinity of the upper limit and lower limit of this detection range. In particular, in a region, such as atmospheric state and A/F 10, remote extremely from the stoichiometric air-fuel ratio, difficulty can be encountered in accurately detecting the air-fuel ratio through the use of the control of the applied voltage mentioned above. That is, the present inventors have lately confirmed that the width of the limiting current region is not always constant in a wide air-fuel ratio detection range, and it is considered that this causes a drop of the air-fuel ratio detection accuracy.

### SUMMARY OF THE INVENTION

The present invention has been developed in consideration of these situations, and it is therefore an object of the invention to provide a gas concentration detecting apparatus capable of implementing the applied voltage control with high accuracy to improve the gas concentration detection accuracy over a wide range.

For this purpose, a gas concentration detecting apparatus according to an aspect of the present invention is for use in a limit-current type gas concentration sensor. In this gas concentration sensor, an element current (limiting current) corresponding to a specific component concentration flows whenever a voltage is applied to a sensor element. Moreover, the applied voltage is controlled on the basis of an applied voltage characteristic defined linearly, and the specific component concentration in a gas to be detected over a wide range on the basis of a limiting current output of the gas concentration sensor. Still moreover, in particular, in a gas concentration detection range, the applied voltage characteristic is set on the basis of a width of a limiting current region for each concentration level.

In short, when the gas concentration varies in a wide gas concentration detection range, an applied voltage can be set in the exterior of a limiting current region in controlling the applied voltage on the basis of the applied voltage characteristic (applied voltage characteristic defining the relationship between a sensor applied voltage and an element current) defined linearly (primary-linearly). Coping with such a situation, the inventors have confirmed that the width of a limiting current region (width on a voltage axis) stands at a different value according to a concentration level and, hence, set an applied voltage characteristic on the basis of the width of a limiting current region on each concentration level. Accordingly, even if the gas concentration varies in a wide gas concentration detection range, the applied voltage is not set in a state deviated from the limiting current region. In consequence, the applied voltage control can be implemented with high accuracy, thus achieving the improvement of the gas concentration detection accuracy over a wide range.

In addition, in this gas concentration detecting apparatus, an applied voltage control unit and an element current detection unit are connected to an electrode of the sensor element, and the applied voltage control unit controls the applied voltage on the basis of the applied voltage characteristic defined linearly, and the element current detection unit detects an element current output corresponding to the specific component concentration of a gas to be detected in the gas concentration detection range set widely. Moreover, in particular, in the applied voltage control unit, the applied voltage characteristic is set on the basis of the width of the limiting current region on each concentration level in the gas concentration detection range.

Also in this case, even if the gas concentration varies in a wide gas concentration detection range, the applied voltage is not set out of the limiting current region. In consequence, the applied voltage control can be implemented with high accuracy, thus achieving the improvement of the gas concentration detection accuracy over a wide range.

In a case in which an applied voltage line is set as an applied voltage characteristic, the following arrangement is employable.

According to a further aspect of the present invention, an upper limit or one point on the limiting current region in the vicinity of the upper limit in the gas concentration detection range is specified and a lower limit or one point on the limiting current region in the vicinity of the lower limit in the gas concentration detection range is specified, with an applied voltage line serving as the applied voltage characteristic being set to pass through (cross) these points specified.

Moreover, according to a further aspect of the present invention, the gas concentration detection range is divided into a plurality of portions, and an upper limit or one point on the limiting current region in the vicinity of the upper limit in each detection range portion is specified and a lower limit or one point on the limiting current region in the vicinity of the lower limit in each detection range portion is specified, with the applied voltage line serving as the applied voltage characteristic being set to pass through these points specified.

In these cases, the applied voltage lines can be set so as to surely pass through the limiting current region in a wide gas concentration detection range.

It is considered that, when a component other than a specific component undergoes a decomposition or the like, the element current varies due to this. Therefore, according to a further aspect of the present invention, the current variation quantity is regulated to determine the limiting current region, and the applied voltage characteristic is set to pass through an intermediate point of this limiting current region. This can remove the influence of the reaction of components other than the specific component, thereby implementing the applied voltage control appropriately.

When the sensor output characteristic (V-I characteristic) is analyzed in detail, there exist a point at which the element current starts to become constant with a rise of the applied voltage in a state where a balance is made between the applied voltage and the electromotive force of the sensor element while the gas diffusion is restricted and a point at which, in addition to a specific component, water in the gas is decomposed and the element current starts to increase due to the water decomposition. Therefore, according to a further aspect of the present invention, when the applied voltage to the sensor element is increased, a limiting current region is set between a first voltage point at which the output of an electromotive force accomplishing a balance with the applied voltage starts and a second voltage point at which the decomposition of water contained in a gas to be detected starts.

Still moreover, according to a further aspect of the present invention, the limiting current region is set between a first voltage point at which, when the applied voltage to the sensor element is increased, the output of the electromotive force accomplishing a balance with the applied voltage starts and a second voltage point at which the element current increases due to the residue of a reaction-hard component of unburned components contained in the gas to be detected. The unburned components contain various components different in composition from each other, and the reaction (decomposition) easiness stands at a different degree for each component. Therefore, the element current increases in the vicinity of an end point (on the high voltage side) of the limiting current region.

According to a further aspect of the present invention, in these arrangement, an intermediate point between the first and second voltage points is specified to set an applied voltage line as the applied voltage characteristic. In this case, the applied voltage line is set to pass between the first and second voltage points and, as a result, the applied voltage is certainly controllable in the limiting current region.

In addition, although the increase in the element current due to the water decomposition depends upon the quantity of water or the like, when the element current including the water decomposition current is detected, a detection error occurs accordingly. Therefore, according to a further aspect of the present invention, in a voltage range in which the element current becomes appropriately constant with respect to the applied voltage on a sensor output characteristic, a voltage range except a voltage range in which water contained in the gas to be detected is decomposed is set as the limiting current region.

On the V-I coordinates representing the output characteristic of the sensor element, the inclination (I/V) of the resistance governing region is determined in accordance with the direct-current internal resistance of the sensor element, and so far, in general, the applied voltage line is set to agree with the inclination of the resistance governing region. On the other hand, according to a further aspect of the present invention, the inclination (I/V) of the applied voltage line serving as the applied voltage characteristic is made smaller than the inclination (I/V) of the resistance governing region. That is, in the V-I coordinates in which the horizontal axis represents a voltage and the vertical axis denotes a current, the applied voltage line is set in a more lying state than the resistance governing region. Since there is a tendency that, in a region where the element current output (I) is large, the width of the limiting current region becomes wide and, in a region where the element current output (I) is small, the width of the limiting current region becomes narrow, when the inclination of the applied voltage line is made small as mentioned above, the applied voltage line can be set to surely pass through the limiting current region.

It is considered that a range in which the widths of the limiting current regions become approximately equal to each other and a range in which they become different from each other exist in the gas concentration detection range. Therefore, according to a further aspect of the present invention, different applied voltage characteristics are set in a gas concentration detection range in which the widths of the limiting current regions are approximately equal to each other and in a gas concentration detection range in which the widths of the limiting current regions are different from each other.

Still additionally, according to a further aspect of the present invention, in a plurality of sensor output characteristics whose temperature conditions of the sensor element differ from each other, the applied voltage line is set to pass through a region in which the limiting current regions overlap. That is, when the temperature condition varies because it is heated or cooled in a temperature environment or the like, the sensor output characteristic on the V-I coordinates falls into a standing state or a lying state, and the limiting current region is shifted along the voltage axis. In such a situation, according to the present invention, the applied voltage line can be set through the limiting current regions common to any element temperature, and the applied voltage is controllable without getting out of the limiting current region at all times irrespective of the element temperature variation. Yet additionally, since it is possible to cope with the variation of the element temperature by setting one applied voltage line, the simplification of the circuit arrangement and the like become feasible, as compared with a case in which prepared are a plurality of applied voltage lines corresponding to the element temperatures.

In this case, preferably, an output characteristic at a minimum temperature in a temperature range actually attainable in a using environment of the sensor element and an output characteristic at a maximum temperature therein are employed so that the applied voltage line is set to pass through a region in which the limiting currents thereof overlap.

Since the sensor element characteristic varies with use and with time, it is appropriate that the applied voltage characteristic is defined in advance in consideration of this variation with time. Therefore, according to a further aspect of the present invention, an initial output characteristic of the sensor element and an estimated output characteristic thereof after the variation with time are used so that the applied voltage line is set to pass through a region in which the limiting current regions thereof overlap. This enables the applied voltage control to be appropriately implemented even after the variation with time, thus maintaining the gas concentration detection accuracy for a long term.

In this case, preferably, the estimated output characteristic after the variation with time is a characteristic at a deterioration tolerance limit permitting the use of an element current output.

Moreover, according to a further aspect of the present invention, the sensor characteristic line and the applied voltage line are set so as not to intersect with each other in a region outside the gas concentration detection range defined in advance. This prevents a mistaken gas concentration detection or damages to the solid electrolyte (zirconia).

Still moreover, according to a further aspect of the present invention, excess current detecting means is provided to detect that the element current is outside a range defined in advance, and the applied voltage characteristic is changed when the excess current detecting means detects an element current outside the defined range. This can suppress the occurrence of an excess voltage application to the sensor element when the element current gets out of the range defined in advance due to the noise, temporary short-circuiting, grounding or the like, thereby achieving the sensor protection. This defined range may be set to correspond to the gas concentration detection range.

In a case in which an element current outside the defined range is detected, in terms of the sensor protection, it is preferable that the applied voltage characteristic is changed to a voltage limiting applied voltage characteristic for suppressing the excess voltage application to the sensor element. However, if the applied voltage characteristics is thoughtlessly changed when the element current varies temporarily due to the noise, short-circuiting, grounding or the like, there is a possibility that the gas concentration detection accuracy lowers due to the rapid variation of the applied voltage or the like. Therefore, according to a further aspect of the present invention, preferably, the timing of the change of the applied voltage characteristic is delayed at the detection of an element current outside the defined range. Accordingly, the applied voltage characteristic is not changed by an instantaneous (extremely short time) element current variation, thus consequently maintaining the gas concentration detection accuracy.

Yet moreover, according to a further aspect of the present invention, in an applied voltage control circuit, the applied voltage is feedback-controlled on the basis of the element current. In this case, in particular, since the applied voltage is controlled on the basis of the aforesaid set applied voltage characteristic, even if the conditions such as gas concentration and element temperature vary, the applied voltage is not set in the exterior of the limiting current region, thus implementing the applied voltage control with high accuracy over a side gas concentration detection range.

When the applied voltage characteristic (applied voltage line) is set as mentioned above, according to circumstances, since the applied voltage line falls into a more lying state than the inclination defined by the direct-current internal resistance of the sensor element, it is considered that the feedback gain in the applied voltage control circuit exceeds 1 so that the applied voltage falls into an oscillation state. For this reason, according to a further aspect of the present invention, preferably, voltage change regulating means is provided in order to regulate the change of the applied voltage for preventing the oscillation of the applied voltage. In this case, in short, the gain of the applied voltage control circuit is set below 1, and a low-pass filter (LPF) can be used as a means therefor.

On the other hand, according to another feature of the present invention, in a predetermined concentration range, a low-voltage side characteristic connecting low-voltage side end points of limiting current regions on the respective levels and a high-voltage side characteristic connecting high-voltage side end points of the same limiting current regions thereon are defined so that the applied voltage characteristic is set on the basis of an intermediate inclination between the inclinations of the characteristics. Also in this case, even if the gas concentration varies in a wide gas concentration detection range, the applied voltage is not set in a state deviated from the limiting current region. In consequence, the applied voltage control can be implemented with high accuracy and, hence, the improvement of the gas concentration detection accuracy is achievable over a wide range.

According to a further feature of the present invention, the low-voltage side characteristic is defined by a voltage point at which the output of an electromotive force coming into balance with respect to the applied voltage when the applied voltage to the sensor element is increased starts, while the high-voltage side characteristic is defined by a voltage point at which the decomposition of water contained in the gas to be detected starts. In this case, the element current can be detected in a region excluding the water decomposition region, thereby enhancing the detection accuracy.

In addition, according to another aspect of the present invention, there is provided a gas concentration detecting apparatus which is made to detect a specific component concentration of an exhaust gas emitted from a combustion engine, wherein the aforesaid low-voltage side characteristic is defined by a voltage point at which, when the applied voltage to the sensor element is increased, the output of an electromotive force coming into balance with respect to the applied voltage starts, while the high-voltage side characteristic is defined by a voltage point at which the element current increases due to the residue of a reaction-hard component of unburned components contained in a gas to be detected. In this case, the element current can be detected in a region excluding the decomposition region of the unburned components left without reacting, thus enhancing the detection accuracy.

Still additionally, according to a further aspect of the present invention, the applied voltage to the sensor element is controlled between a voltage point at which, when the applied voltage to the sensor element is increased, the output of an electromotive force coming into balance with respect to the applied voltage starts and a voltage point at which the decomposition of water contained in the gas to be detected starts. Also in this case, the element current can be detected in a region excluding the decomposition region of water, thus enhancing the detection accuracy.

Yet additionally, of a voltage range in which the element current becomes approximately constant with respect to the applied voltage on a sensor output characteristic, a voltage range excluding a voltage range in which water contained in the gas to be detected is decomposed is set as a limiting current region, and the applied voltage is controlled in this limiting current region. The element current can be detected in the region which does not include the water decomposition region, thus enhancing the detection accuracy.

Moreover, according to a further aspect of the present invention, the applied voltage is controlled in a region in which the limiting current regions overlap in a plurality of sensor output characteristics different in temperature condition of the sensor element from each other. That is, when the temperature condition varies because the sensor element is heated or cooled in a temperature environment or the like, the sensor output characteristic on the V-I coordinates falls into a standing state or a lying state, and the limiting current region is shifted along the voltage axis. In such a situation, according to the present invention, the applied voltage control can be implemented through the use of the limiting current regions common to any element temperature, and the applied voltage is controllable without getting out of the limiting current region at all times irrespective of the element temperature variation.

Still moreover, according to a further aspect of the present invention, an output characteristic at a minimum temperature in a temperature range actually attainable in a using environment of the sensor element and an output characteristic at a maximum temperature therein are employed so that the applied voltage is controlled in a region in which the limiting currents thereof overlap.

In addition, according to a further aspect of the present invention, an initial output characteristic of the sensor element and an estimated output characteristic thereof after the variation with time are used so that the applied voltage is controlled in a region in which the limiting current regions thereof overlap. This enables the applied voltage control to be appropriately implemented even after the variation with time, thus maintaining the gas concentration detection accuracy for a long term.

In this case, preferably, the estimated output characteristic after the variation with time is an estimated output characteristic at a deterioration tolerance limit permitting the use of an element current output.

In a gas concentration detecting apparatus made to detecting an air-fuel ratio on the basis of an oxygen concentration in an exhaust gas emitted as an object of detection from a combustion engine, the air-fuel ratio detection range is expanded in the following regions.

According to a further feature of the present invention, the lean side limit of the air-fuel ratio detection range is set at A/F20 or more, and according to a further feature of the present invention, the lean side limit of the air-fuel ratio detection range is set at the atmosphere. Moreover, according to a further feature of the present invention, the rich side limit of the air-fuel ratio detection range is set at A/F11 or less. That is, in a lean combustion engine, there is a need to detect the air-fuel ratio in a region showing A/F20 or more, while there is a need to detect the air-fuel ratio in the atmospheric state under the regulations such as OBD. Still moreover, during a high-load operation or rich spike, the air-fuel ratio detection below A/F11 (in the vicinity of A/F10) becomes necessary. Although, from these, the air-fuel ratio detection in a wide range becomes necessary, according to the present invention, a proper air-fuel ration detection becomes feasible in a desired air-fuel ratio region.

In supplementary explanation, in a stoichiometric combustion engine in which the air-fuel ratio control is implemented in the vicinity of the stoichiometric air-fuel ratio, the needed range for the air-fuel ratio detection is approximately A/F12 to A/F18, and in this range, even if the applied voltage line is set to coincide with the inclination of the resistance governing region in the sensor output characteristic (V-I characteristic), the air-fuel ration detection accuracy is securable. However, in a case in which the air-fuel ratio detection range is expanded to the lean side and rich side as mentioned above, if the applied voltage line is set to coincide with the inclination of the resistance governing region in the sensor output characteristic, for example, at the atmosphere or A/F10, there is a possibility that the applied voltage line gets out of the limiting current region to lower the air-fuel ratio detection accuracy. On the other hand, according to the present invention described above, the applied voltage control is executed to a limiting current region at each air-fuel ratio and, hence, an appropriate air-fuel ratio detection is realizable even in any air-fuel ratio region.

### BRIEF DESCRIPTION OF THE DRAWINGS

Other objects and features of the present invention will become more readily apparent from the following detailed description of the preferred embodiments taken in conjunction with the accompanying drawings in which:
FIG. 1 is a circuit diagram showing an arrangement of a n air-fuel ratio detecting apparatus according to an embodiment of the present invention;
FIG. 2 is a cross-sectional view showing a construction of a sensor element;
FIG. 3 is an illustration of an output characteristic of an A/F sensor;
FIG. 4A is an illustration of an equivalent circuit of a sensor element;
FIG. 4B is an illustration of an electromotive force characteristic;
FIG. 5 is an illustration of an output characteristic of an A/F sensor;
FIG. 6 is an illustration of an output characteristic of an A/F sensor;
FIG. 7 is an illustration useful for explaining a procedure for determining a limiting current region;
FIG. 8 is an illustration of an output characteristic of an A/F sensor;
FIG. 9 is an illustration of an output characteristic of an A/F sensor;
FIG. 10 is an illustration of an output characteristic of an A/F sensor;
FIG. 11 is an illustration of an output characteristic of an A/F sensor;
FIG. 12 is a circuit diagram showing an arrangement of an air-fuel ratio detecting apparatus;
FIG. 13 is an illustration of an output characteristic of an A/F sensor;
FIG. 14 is a circuit diagram showing an arrangement of an air-fuel ratio detecting apparatus;
FIG. 15 is a circuit diagram showing an arrangement of an air-fuel ratio detecting apparatus; and
FIG. 16 is an illustration of an output characteristic of an A/F sensor.

### DESCRIPTION OF THE PREFERRED EMBODIMENTS

### (First Embodiment)

Referring to the drawings, a description will be given hereinbelow of a gas concentration detecting apparatus according to a first embodiment of the present invention. This embodiment relates to an air-fuel ratio detecting apparatus made to detect an oxygen concentration (air-fuel ratio, which will hereinafter be referred to equally to an "A/F") in a detection gas which is an exhaust gas emitted from an engine mounted on a vehicle, and an air-fuel ratio detection result from the air-fuel ratio detecting apparatus is used for an air-fuel ratio control system comprising an engine ECU and others. The air-fuel ratio control system realizes properly, for example, stoichiometric combustion control for feedback-controlling an air-fuel ratio in the vicinity of the stoichiometric air-fuel ratio and lean combustion control for feedback-controlling the air-fuel ratio in a predetermined lean region. Moreover, this embodiment enables a wide-range air-fuel ratio detection coping with the exhaust gas regulations and the abnormality detection regulations (OBD) in the recent years or in the future and an air-fuel ratio detection in a wide range from a rich region (for example, A/F11) for implementing the control on the occlusion NOx emission of an NOx occlusion reduction type catalyst installed in an exhaust system, the sulfur poisoning regeneration and others.

First of all, referring to FIG. 2, a description will be given hereinbelow of a construction of an A/F sensor functioning as a gas concentration sensor. This A/F sensor comprises a sensor element 10 having a multilayer construction, and FIG. 2 shows a cross-sectional construction of the sensor element 10. In fact, this sensor element 10 has an elongated configuration extending in a direction perpendicular to the FIG. 2 paper surface, and the entire element is accommodated in a housing or an element cover.

The sensor element 10 is composed of a solid electrolyte 11, a diffusion resistance layer 12, a shielding layer 13 and an insulating layer 14 which are stacked vertically as shown in the illustration. A protective layer (not shown) is placed around this element. The rectangular-plate solid electrolyte (solid electrolyte member) 11 is made in the form of a partial stabilization zirconia sheet, and a pair of electrodes 15 and 16 are provided in opposed relation to each other in a state where the solid electrolyte 11 is interposed therebetween. Each of the electrodes 15 and 16 is made of a platinum Pt or the like. The diffusion resistance layer 12 (gas diffusion rate-determining portion) is designed in the form of a porous sheet made to introduce the exhaust gas to the electrode 15, and the shielding layer 13 is made from a dense layer made to suppress the transmission of the exhaust gas. Each of these layers 12 and 13 is made of ceramics such as alumina or zirconia according to a sheet formation method, and its gas permeability depends upon the average pore size and the porosity.

The insulating layer 14 is made of ceramics such as alumina, zirconia or the like, and an atmosphere duct 17 is formed in a portion confronting the electrode 16. Moreover, a heater 18 made of platinum Pt or the like is buried in this insulating layer 14. The heater 18 comprises a linear heating device which generates heat when energized by a battery power supply, and the heat generation heats the entire element. Incidentally, in the following description, depending upon circumstances, the electrode 15 is equally referred to as a "diffusive layer side electrode", and the electrode 16 is equally referred to as an "atmosphere side electrode". In this embodiment, as terminal connected to the atmosphere side electrode 16 is set as a positive side terminal (+ terminal), while a terminal connected to the diffusive layer side electrode 15 is set as a negative side terminal (-terminal).

In the aforesaid sensor element 10, an exhaust gas existing around it is introduced through side portions of the diffusion resistance layer 12 to reach the diffusive layer side electrode 15. When the exhaust gas is in a lean condition, the oxygen in the exhaust gas is decomposed at the diffusive layer side electrode 15 in a manner such that a voltage applied between the electrodes 15 and 16 and, after passing through the solid electrolyte 11 in a state ionized, is discharged through the atmosphere side electrode 16 into the atmosphere duct 17. At this time, a current (positive current) flows in a direction of the atmosphere side electrode 16 → the diffusive layer side electrode 15. On the other hand, when the exhaust gas is in a rich condition, the oxygen in the atmosphere duct 7 is decomposed at the atmosphere side electrode 16 and, after passing through the solid electrolyte 11 in a state ionized, is discharged through the diffusive layer side electrode 15. Moreover, a catalytic reaction occurs between it and unburned components such as HC and CO in the exhaust gas. At this time, a current (negative current) flows in a direction of the diffusive layer side electrode 15 → the atmosphere side electrode 16.

FIG. 3 is an illustration of a basic voltage-current characteristic (V-I characteristic) of an A/F sensor. In FIG. 3, a flat portion parallel with the voltage axis (horizontal axis) forms a limiting current region specifying an element current Ip (limiting current) of the sensor element 10, and an increase/decrease in this element current Ip corresponds to an increase/decrease in air-fuel ratio (that is, the degree of lean/rich condition). That is, the element current Ip increases as the air-fuel ratio shifts toward the lean side while the element current Ip decreases as the air-fuel ratio shifts toward the rich side. In this embodiment, as one example, a wide air-fuel ratio detection range is defined in a range from A/F10 to the atmosphere (oxygen concentration : 20.9%).

In this V-I characteristic, a lower voltage side than the limiting current region establishes a resistance governing region, and the inclination of a linear line (primary straight line) portion in the resistance governing region is specified by a direct-current internal resistance Ri of the sensor element 10. The direct-current internal resistance Ri varies with the element temperature and the direct-current internal resistance Ri increases with a drop of the element temperature. That is, at this time, the inclination of the linear portion in the resistance governing region is made smaller (the linear portion changes to a laying-down state). Moreover, the direct-current internal resistance Ri decreases as the element temperature rises. That is, at this time, the inclination of the linear portion in the resistance governing region is made larger (the linear portion changes to a standing state). In the illustration, RG represents an applied voltage line (applied voltage characteristic) for determining an applied voltage Vp to the sensor element 10.

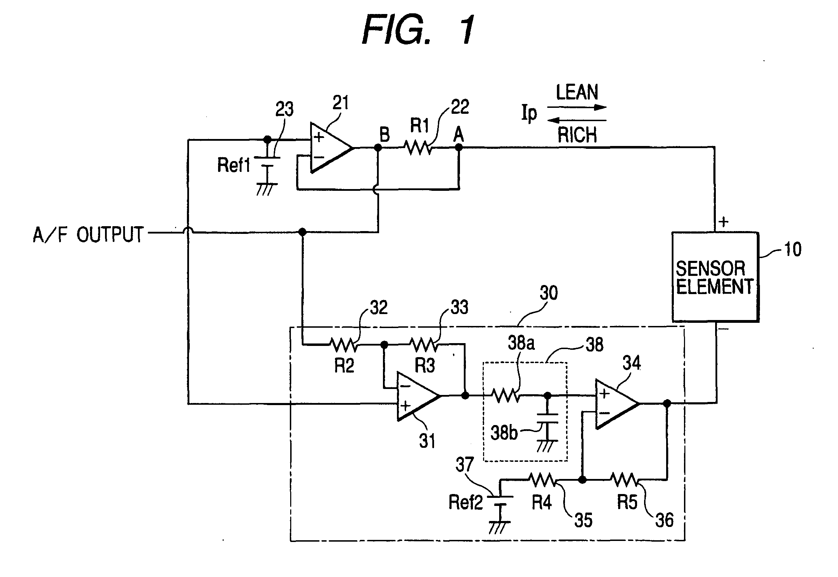

FIG. 1 is an electric circuit diagram showing an arrangement of an applied voltage control system for the sensor element 10. In FIG. 1, a reference power supply 23 is connected through an operational amplifier 21 and a current detection resistor 22 (resistance value = R1) to the + terminal (atmosphere side electrode 16) of the sensor element 10, and an applied voltage control circuit 30 is connected to the -terminal (diffusive layer side electrode 15) of the sensor element 10. In this case, a point A at one end of the current detection resistor 22 is maintained at a voltage equal to a reference voltage Ref1. The element current Ip flows through the current detection resistor 22 and the voltage at a point B varies in accordance with the element current Ip. This voltage at the point B is outputted as an A/F output forming an air-fuel ration output to a microcomputer (not shown) and others. Since the element current does not flow at the stoichiometric air-fuel ratio (Ip = 0 mA), the voltage at the point B becomes equal to the reference voltage Ref1. Moreover, if the exhaust gas is in a lean condition, a current flows from the + terminal to the - terminal in the sensor element 10 and, hence, the voltage at the point B rises. On the other hand, in the case of a rich condition, a current flows from the - terminal to + terminal in the sensor element 10 and, hence, the voltage at the point B drops.

The applied voltage control circuit 30 monitors the point-B voltage (A/F output) for determining a voltage to be applied to the sensor element 10 on the basis of the monitored voltage value, and basically implements the applied voltage control so that the applied voltage increases when the element current Ip increases (that is, when the point-B voltage rises). Concretely, the applied voltage control circuit 30 is composed of an inverting amplification circuit comprising an operational amplifier 31 and resistors 32, 33 (resistance values = R2, R3), an inverting amplification circuit comprising an operational amplifier 34 and resistors 35, 36 (resistance values = R4, R5), a reference power supply 37 for generating a reference voltage Ref2, and an LPF 38 located at an output portion of the operational amplifier 31.

In this arrangement, the applied voltage control circuit 30 defines an applied voltage characteristic, and the inclination of the applied voltage line RG representing the applied voltage characteristic is determined by "R1 × R3/R2 × 2". Moreover, R4 = R5. The LPF 38 is composed of a resistor 38a and capacitor 38b. By passing through this LPF 38, the variation of the applied voltage output to the sensor element 10 is controlled.

In addition, this air-fuel ratio detecting apparatus detects an alternating-current impedance Zac of the sensor element 10 through the use of the so-called sweep method and controls the element temperature at a constant value on the basis of this alternating-current impedance Zac. That is, on the basis of a command from a microcomputer (not shown), the applied voltage control circuit 30 temporarily produces an alternating-current-like variation of the sensor applied voltage to, at this time, detect the alternating-current impedance Zac on the basis of a variation of the applied voltage and a variation of the element current. Moreover, the energizing of the heater 18 is controlled to keep the alternating-current impedance Zac at a predetermined target value. This enables the sensor element 10 to be maintained at a constant target temperature (for example, 750 °C).

Meanwhile, the inventors has confirmed that, in the actual sensor output characteristic, the width of the limiting current region (the absolute width of a voltage) varies in accordance with a gas atmosphere. In general, the width of the limiting current region is wide in the lean region while the width of the limiting current region is narrow in the rich region. A detailed description will be given hereinbelow of the fact that the width of the limiting current region stands at a different value according to a gas atmosphere.

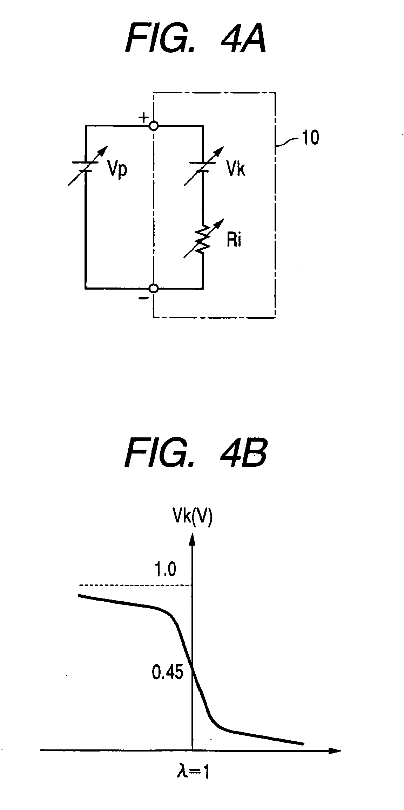

FIG. 4A is an illustration of an equivalent circuit showing the sensor element 10 and an applied voltage Vp and, in the illustration, the sensor element 10 is shown in the form of a direct-current internal resistance Ri and an electromotive force Vk being connected in series to each other. Moreover, FIG. 4B is an illustration of an electromotive force characteristic of the sensor element 10. As shown in FIG. 4A, the electromotive force Vk is 0.45V at λ = 1 (A/F14.5), and with respect to this, the electromotive force Vk rapidly drops in the lean side, i.e., in the case of λ > 1 while it rapidly rises in the rich side, i.e., in the case of λ < 1.

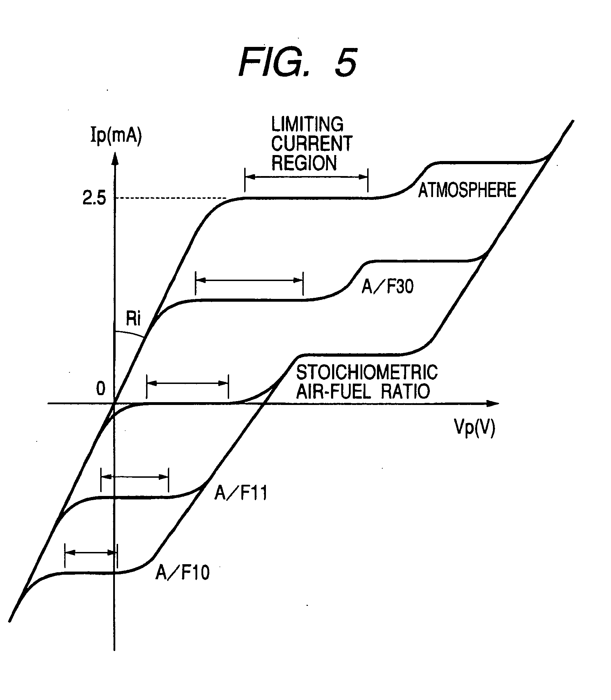

FIG. 5 is an illustration of a sensor output characteristic (V-I characteristic) indicating the fact that the width of the limiting current region becomes a different value according to a gas atmosphere. It is considered that the width of the limiting current region is determined by the following factors: that is,
1) an electromotive force Vk the sensor element 10 provides;
2) decomposition of water (H₂O) contained in an exhaust gas; and
3) difference between the degrees of decomposition easiness of unburned components contained in an exhaust gas.

A detailed description will be given hereinbelow of each of the aforesaid factors.

With respect to the V-I characteristic shown in FIG. 5, first, in the case of gradually increasing the applied voltage Vp in the resistance governing region (lower voltage side than the limiting current region), the element current Ip increases while being bound by the direct-current internal resistance Ri. At this time, if the exhaust gas is in a lean condition, since oxygen is not sufficiently decomposed on the diffusive layer side electrode 15 and it is not discharged, a lean condition occurs in the vicinity of the diffusive layer side electrode 15. Moreover, if the exhaust gas is in a rich condition (or stoichiometric air-fuel ratio state), a negative current flows when a negative voltage Vp is applied thereto, and oxygen shifts from the atmosphere side electrode to the diffusive layer side electrode. Therefore, oxygen becomes excessive in the vicinity of the diffusive layer side electrode 15 and, likewise, a lean state appears in the vicinity of the diffusive layer side electrode 15. Accordingly, at any air-fuel ratio in the resistance governing region, the electromotive force Vk of the sensor element 10 becomes approximately 0V.

With a further rise of the applied voltage Vp, the gas diffusion is bound by the diffusion resistance layer 12. At this time, even if the exhaust gas is in a lean state, oxygen runs low in the vicinity of the diffusive layer side electrode 15. Therefore, the electromotive force Vk rises, and the applied voltage Vp and the electromotive force Vk increase in a state balanced (Vp - Vk = constant) and a limiting current region is established to make the element current Ip constant. In the case of the stoichiometric state (stoichiometric air-fuel ratio state), Vp and Vk rise under the condition of Vp = Vk and a limiting current region is established to make the element current Ip = 0 mA. Moreover, also in the case of a rich state, both the applied voltage Vp and electromotive force Vk rise while balanced (Vp - Vk = constant) and, hence, a limiting current region is established to make the element current Ip constant. However, since the element current becomes negative in the rich state, the relationship of Vp < Vk takes place in the limiting current region.

In a case in which the Applied voltage Vp further rises to cross the limiting current region, the components other than oxygen contained in the exhaust gas greatly affect the variation of the element current Ip. Concretely, because the deposition voltage of water (H₂O) contained in the exhaust gas varies according to the air-fuel ratio and the degrees of decomposition easiness of the unburned components (HC, CO, H₂, and others) differ from each other, they have influence on the variation of the element current Ip. Therefore, the voltage point at the end of the limiting current region varies according to air-fuel ratio and, consequently, the width of the limiting current region stands at a different value for each air-fuel ratio.

First, a description will be given hereinbelow of a case of a stoichiometric state to an extremely lean (atmosphere) state. In a case in which the applied voltage Vp rises to cross the limiting current region, due to the electric energy, water in the exhaust gas starts to undergo the decomposition at the diffusive layer side electrode 15 and the element current Ip increases. In this case, since the quantity of water contained in the exhaust gas is different according to air-fuel ratio, the voltage point (water decomposition voltage), at which the decomposition of water starts, varies. Since water in the exhaust gas gets less in a gas atmosphere equivalent to the atmosphere due to the difference in combustion situation and the like and the water increases in quantity as approaching the stoichiometric state, the water decomposition voltage is relatively high in the atmosphere while it is relatively low in the stoichiometric state. Therefore, the width of the limiting current region becomes larger as the degree of the lean state increases.

On the other hand, in the case of a rich state, since a catalytic reaction of the unburned components in the exhaust gas advances in the vicinity of the diffusive layer side electrode 15, unlike the oxygen reaction, for example, in the atmospheric environment, the width of the limiting current region becomes a different value due to a difference in reaction easiness for each gas component. That is, the oxygen quantity to be drawn from the atmosphere side electrode 16 into the diffusive layer side electrode 15 runs short with a rise of the applied voltage Vp. At this time, the reaction-easy gases such as CO in the exhaust gas are decomposed in the diffusive layer side electrode 15, but the reaction-hard gases such as C₃H₈ (propane) of HC are left without being decomposed. Thereafter, with a rise of the applied voltage Vp, the reaction-hard components are gradually decomposed so that the element current Ip increases. If the quantity of the unburned component varies according to the depth of the rich gas, the voltage point (end point of the limiting current region) at which the element current Ip starts to increase varies accordingly and, hence, the width of the limiting current region varies. In this connection, if the applied voltage Vp further rises to cross the restriction of the gas reaction in the limiting current region, the element current Ip approaches 0 mA, and if the voltage further rises, as in the case of the stoichiometric condition, water in the exhaust gas is decomposed by the electric energy in the diffusive layer side electrode 15, thus increasing the element current Ip.

Meanwhile, in a case in which the applied voltage Vp is excessively increased to cross the water decomposition region, the solid electrolyte (zirconia) is decomposed by the electric energy, which can cause the damages to the sensor element 10. For this reason, in this excessive voltage region, it is considered that oxygen is discharged into the atmosphere duct 17 to increase the element current Ip.

As described above, the limiting current region is established under the influence of the electromotive force of the sensor element 10 or the reaction of water of unburned components and, in consequence, the width of the limiting current region stands at a different value for each air-fuel ratio.

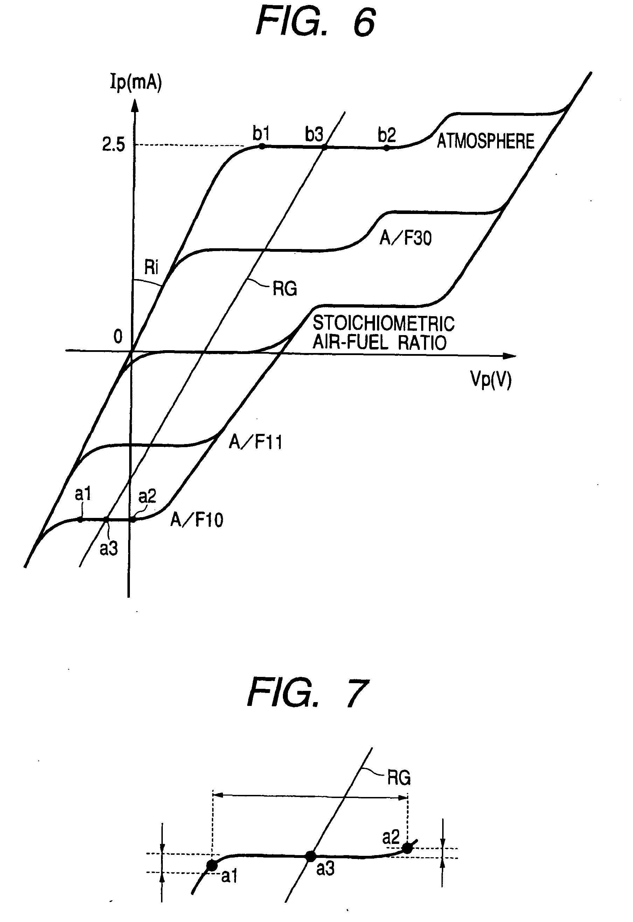

Therefore, in this embodiment, from the fact that the width of the limiting current stands at a different value according to air-fuel ratio, the applied voltage characteristic is set in consideration of the width of the limiting current region. This will be described hereinbelow with reference to FIG. 6. The characteristic itself shown in FIG. 6 is similar to the aforesaid characteristic shown in FIG. 5.

In the sensor output characteristic shown in FIG. 6, the width of the limiting current region stands at the smallest value at the rich limit (A/F10) forming the lower limit of the air-fuel ratio detection range, while the width of the limiting current region stands at the largest value at the lean limit (atmosphere state) forming the upper limit. Therefore, the applied voltage characteristic (applied voltage line RG) is set on the basis of the widths of the limiting current region at the rich limit and at the lean limit. Concretely, an intermediate point a3 is obtained from the end points a1 and a2 on the low voltage side and the high voltage side in the limiting current region at the rich limit (A/F10) and an intermediate point b3 is obtained from the end points b1 and b2 on the low voltage side and the high voltage side in the limiting current region at the lean limit (atmosphere state), with the intermediate point a3 between the end points a1 and a2 and the intermediate point b3 between the end points b1 and b2 being connected to each other to linearly draw an applied voltage line RG.

In this case, as shown in FIG. 7, the end points (a1, a2 in FIG. 7) of the limiting current region are determined on the condition that they are wining a detection error allowed from the air-fuel ratio requirement accuracy, in other words, that the variation of the element current Ip is below a predetermined quantity, and the applied voltage line RG is set to pass through the intermediate point a3 between a1 and a2. The fact that the variation of the element current Ip is below the predetermined quantity also corresponds to the fact that the components other than a specific component (in this case, oxygen) do not undergo the decomposition or the like.

The low-voltage side end point (for example, a1, b1 in FIG. 6) of the limiting current regions is a voltage point at which, when the applied voltage Vp is increased, the output of an electromotive force balanced with respect to the applied voltage Vp starts, and corresponds to a first voltage point. Moreover, the high-voltage side end point (for example, a2, b2 in FIG. 6) is a voltage point at which the decomposition of water contained in an exhaust gas starts or a voltage point at which the element current Ip increases due to the residue of reaction-hard components of the unburned components contained in the exhaust gas, and corresponds to a second voltage point.

In the circuit arrangement shown in FIG. 1, the resistance values R1 to R3 are adjusted so that the inclination of the applied voltage line RG is set as mentioned above. Moreover, when the applied voltage Vp is controlled on this applied voltage line RG, the voltage is applied so as not to get out of the limiting current region irrespective of a variation of the air-fuel ratio, thereby enabling an accurate air-fuel ratio detection.

In a case in which the applied voltage characteristic is set as mentioned above, the applied voltage line RG takes a lying state as compared with the inclination of the resistance governing region depending upon the direct-current internal resistance Ri and, hence, the feedback gain exceeds 1 in the applied voltage control circuit 30 so that the oscillation of the applied voltage Vp tends to occur. For preventing the oscillation, there is a need to slow the changing speed of the applied voltage Vp. For this reason, in this embodiment, as shown in FIG. 1, the LPF 38 functioning as a voltage change regulating means is provided in the applied voltage control circuit 30.

However, if the time constant of the LPF 38 is too high, the variation of the applied voltage Vp deviates largely from the applied voltage line RG and a voltage outside the limiting current region is temporarily applied to the sensor element 10. In this case, the impairment of the air-fuel ratio or the damage to the sensor element (zirconia) 10 can occur. In particular, if the air-fuel ratio varies rapidly, the variation of the applied voltage Vp excessively delays and, hence, such a situation occurs. Therefore, it is desirable that the time constant of the LPF 38 is determined in consideration of the transitional variation of the air-fuel ratio.

With this embodiment described above in detail, the following outstanding effects are obtainable.

Since the applied voltage line RG is set on the basis of the width of the limiting current region, even if the air-fuel ratio varies in a wide air-fuel ratio detection range, the applied voltage Vp is not set out of the limiting current region. As a result, the applied voltage control can be implemented with high accuracy and, hence, the improvement of the air-fuel ratio detection accuracy is achievable over a wide range.

In particular, since the limiting current region is determined from the first voltage point (for example, a1, b1 in FIG. 6) based on the electromotive force of the sensor element 10 and the second voltage point a2, b2 in FIG. 6) based on the reaction of water or unburned components and the intermediate point therebetween is specified to set the applied voltage line RG, the element current I is detectable in a region excluding the water decomposition region or the decomposition region of the unburned components left without reacting. This enables the applied voltage Vp to be surely controlled in the limiting current region and improves the detection accuracy on the element current Ip.

Although the applied voltage line RG enters a lying state as compared with the inclination of the resistance governing region depending on the direct-current internal resistance Ri, since the LPF 38 is provided in the applied voltage control circuit 30 to regulate the variation of the applied voltage Vp, the oscillation of the applied voltage Vp is preventable.

In FIG. 6, it is also appropriate that the low-voltage side characteristic forming the connection of the low-voltage side end points (a1, b1 and others in FIG. 6) of the limiting current region and the high-voltage side characteristic forming the connection of the high-voltage side end points (a2, b2 and others in FIG. 6) of the same limiting current region are prescribed so that the applied voltage characteristic is set on the basis of an intermediate inclination between the inclinations of these characteristics. Also in this case, the applied voltage control can be implemented with high accuracy and, in consequence, the improvement of the air-fuel ratio detection accuracy is achievable over a wide range.

### (Second Embodiment)

In this air-fuel ratio detecting apparatus, although the heater control is implemented so that the temperature (element temperature) of the sensor element 10 is maintained at a constant value, the element temperature can vary thoughtlessly due to external factors. For example, it is considered that the temperature of the exhaust gas rises due to the variation of the engine operating condition to increase the element temperature or the fuel cutting is made to decrease the element temperature. The variation of the element temperature causes a variation of the direct-current internal resistance Ri so that a variation of the sensor output characteristic occurs and, in consequence, the limiting current region shifts along the voltage axis directions. A description will be given hereinbelow of a procedure of setting the applied voltage characteristic in consideration of the variation of the element temperature. In short, the applied voltage characteristic is set in a region where limiting current regions overlap in a plurality of sensor output characteristics different in the temperature condition of the sensor element 10, and the applied voltage control is implemented.

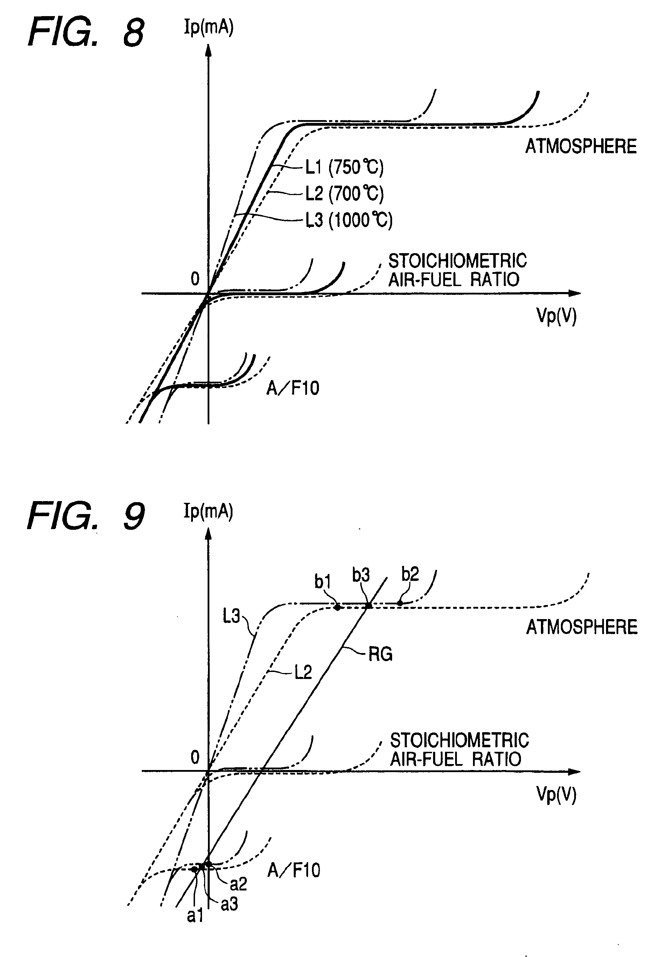

For example, let it be assumed that the target value of the element temperature is 750 °C and the element temperature rises up to approximately 1000 °C due to the exhaust gas heating or the like and lowers to a minimum of approximately 700 °C. FIG. 8 shows sensor output characteristics when the element temperature = 700 °C, 750 °C and 1000 °C, and in this illustration, with respect to the characteristic line L1 at the element temperature of 750 °C indicated by a solid line, the characteristic line L2 at the element temperature of 700 °C indicated by a dotted line is in a lying state while the characteristic line L3 at the element temperature of 1000 °C indicated by an alternate long and two short dashes line is in a standing state.

In this case, for always implementing the applied voltage control with high accuracy within a temperature range to be actually available, the basis from which the applied voltage characteristic (applied voltage line RG) is set becomes an issue. In this embodiment, the applied voltage line RG is set to pass through a region in which the limiting current regions overlap in a plurality of sensor output characteristics (output characteristics at a minimum temperature and output characteristics at a maximum temperature within a temperature range of use) different in element temperature condition from each other. FIG. 9 shows, of the characteristic lines L1 to L3, the most-lying characteristic line L2 at the element temperature of 700 °C and the most-standing characteristic line L3 at the element temperature of 1000 °C.

As shown in FIG. 9, the low-voltage side end points a1 and b1 (a1 denotes an end point in the case of A/F10, and b1 denotes an end point in the case of the atmosphere) in the limiting current regions are extracted from the characteristic line L2 at the element temperature of 700 °C, and the high-voltage side end points a2 and b2 (a2 denotes an end point for A/F10, and b2 denotes an end point for the atmosphere) in the limiting current regions are extracted from the characteristic line L3 at the element temperature of 1000 °C. Moreover, as in the case of the above-described first embodiment, the intermediate point a3 is obtained from the end points a1 and a2 in the limiting current regions for A/F10 and the intermediate point b3 is obtained from the end points b1 and b2 in the limiting current regions for the atmosphere, with the applied voltage line RG being drawn so as to make a connection between the intermediate points a3 and b3. The applied voltage line RG is set in this way.

As described above, according to the second embodiment, since the applied voltage line RG is set to pass through limiting current regions common among all the element temperatures, the applied voltage control can be implemented so as to be always in the limiting current region irrespective of the variation of the element temperature. Moreover, since the setting of one applied voltage line RG can cope with the element temperature variation, the simplification of the circuit arrangement and others are realizable as compared with a case in which a plurality of applied voltage lines are prepared in conjunction with the element temperatures.

### (Third Embodiment)

In this air-fuel ratio detecting apparatus, since the applied voltage line RG consequently becomes a more lying state than the inclination defined by the direct-current internal resistance Ri, it is considered that the following disadvantage develops.

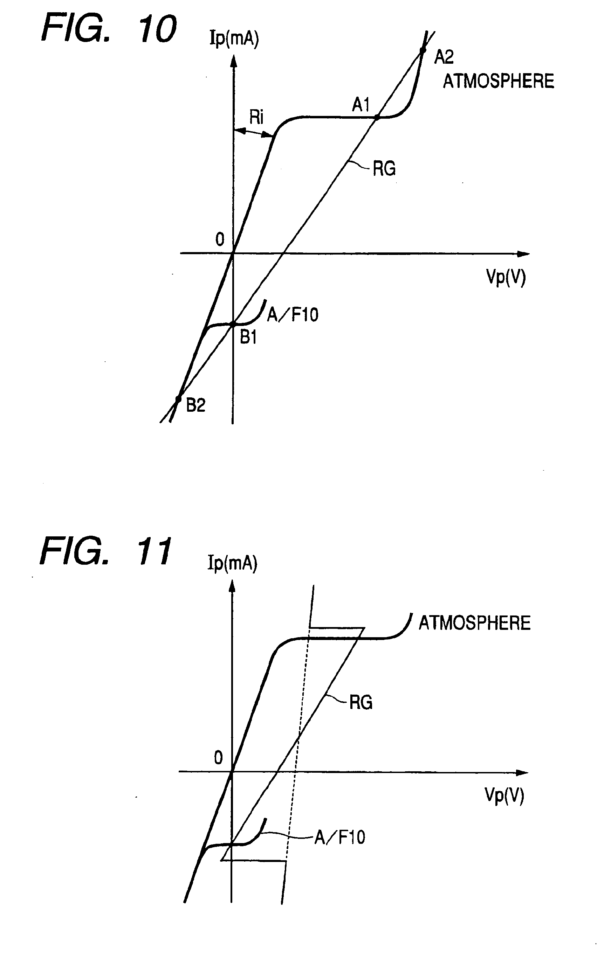

As FIG. 10 shows, in a case in which a voltage is applied at a point A1 on an applied voltage line RG in the atmosphere, if the element current Ip increases due to the disturbance such as noise, the applied voltage Vp rises temporarily. Assuming that the applied voltage Vp rises to cross a point A2, as with the point A1, the point A2 also provides a sensor output characteristic in the atmospheric condition and, hence, the state at the point A2 is fixed so that it does not return to the point A1 in the limiting current region. Accordingly, an excessive current is applied to the sensor element 10 so that there is a possibility that sensor breakdown, mistaken air-fuel ratio detection and the like occur due to damages to the solid electrolyte. FIG. 10 shows a relatively standing state of the sensor characteristic stemming from a rise of the element temperature or the like, and in this state, the aforesaid disadvantage can develop. Also in an extremely rich atmosphere, the applied voltage varies due to noise or the like and the shifting from a point B 1 to a point B2 takes place so that the sensor breakdown can occur.

For this reason, the inclination of the applied voltage line RG is increased (stood) in order to avoid the intersection with the sensor output characteristic in a region outside the air-fuel ratio detection range, i.e., on a lean side relative to the atmosphere or a rich side relative to A/F10.

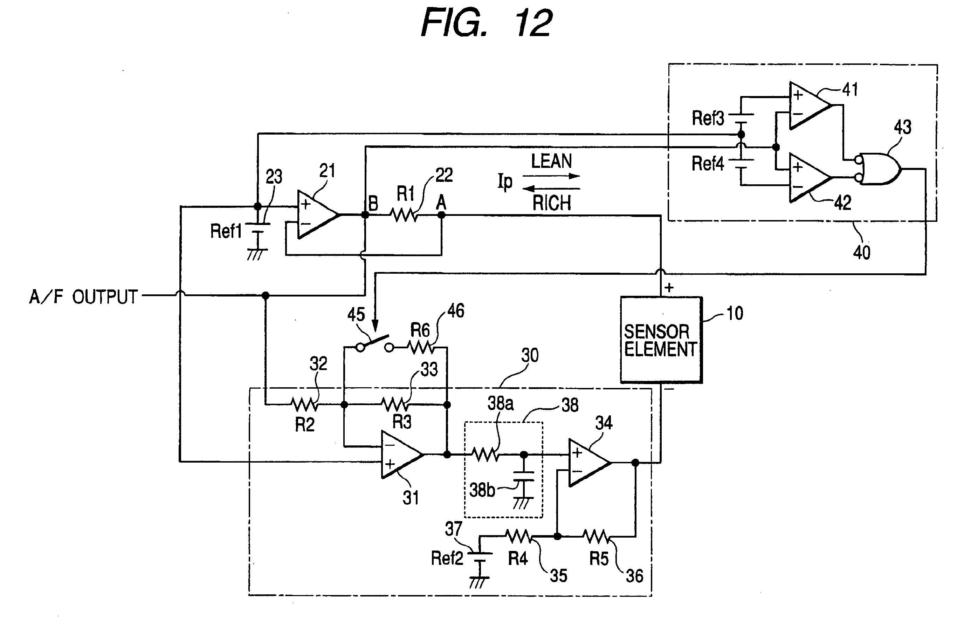

For example, the applied voltage line RG is set as shown in FIG. 11. In FIG. 11, the inclination of the applied voltage line RG is changed in the air-fuel ratio detection range (A/F10 to atmosphere) and in a region existing out of this detection range and, outside the air-fuel ratio detection range, the applied voltage line is placed into a more standing state than that in the detection range. FIG. 12 shows a circuit arrangement for setting the applied voltage line RG shown in FIG. 11.

In FIG. 12, the difference from the FIG. 1 arrangement is that an over-current monitoring circuit 40 is provided to monitor an excess current through a voltage at a point B (that is, an A/F output) in the illustration and a switch 45 and a resistor 46 are connected in parallel with a feedback resistor 33 constituting an inverting amplifier of an applied voltage control circuit 30. In detail, the over-current monitoring circuit 40 is composed of two comparators 41, 42 and a logical circuit (NAND circuit) 43, and a reference voltage Ref1 + Ref3 is inputted to the + terminal of the comparator 41 and the voltage at the point B is inputted to the - terminal thereof. Moreover, a reference voltage Ref1 - Ref4 is inputted to the - terminal of the comparator 42 and the voltage at the point B is inputted to the + terminal thereof. The logical circuit 43 issues an H (high) output when the output of any one of the comparators 41 and 42 is in an L (low) state. The inclination of the applied voltage line RG is switched in a manner such that the switch 45 is turned on/off according to the output of the logical circuit 43 (output of the over-current monitoring circuit 40).

In this case, when the voltage at the point B is in a range of Ref1 - Ref4 to Ref1 + Ref3, both the outputs of the comparators 41 and 42 become H and, in consequence, the output of the logical circuit 43 becomes L. Therefore, the switch 45 falls into the off state and the value of the feedback resistance becomes the resistance value R3 of the resistor 33. That is, this is a state in the air-fuel ratio detection range (A/F10 to atmosphere).

On the other hand, when the voltage at the point B becomes higher than Ref1 + Ref3 in a lean atmosphere, the output of the comparator 41 becomes L and the output of the logical circuit 43 becomes H. Therefore, the switch 45 is turned on and the value of the feedback resistor becomes a value of a combined resistance of the resistors 33 and 46. Moreover, when the voltage at the point B drops below Ref1 - Ref4 in a rich atmosphere, the output of the comparator 42 becomes L and the output of the logical circuit 43 becomes H. Therefore, the switch 45 is turned on and the value of the feedback resistor becomes a value of a combined resistance of the resistors 33 and 34.

From the above, in a case in which the region becomes out of the air-fuel ratio detection range and an excess current flows in the sensor element 10, the applied voltage line RG is set in a standing state to prevent the sensor characteristic line and the applied voltage line from intersecting with each other. That is, the applied voltage characteristic is changed at the detection of an excess current to suppress an excess voltage application stemming from noise. Moreover, an excess current is detected also at other than the noise occurrence, for example, in the case of the occurrence of temporary short-circuit (+ B short) and grounded short-circuit (GND short) in the sensor circuit, and the applied voltage characteristic is changed accordingly to suppress the excess voltage application stemming from noise. Therefore, the mistaken air-fuel ratio detection or the damage to the solid electrolyte (zirconia) are preventable.

In addition, in a case in which a contact failure develops temporarily in a connector and the like connected to the sensor element 10, when the sensor element 10 becomes an open state (0V) and then returns to a closed state, the applied voltage varies rapidly and the element current also varies. At this time, because of the rapid voltage variation, an element current corresponding to the alternating-current characteristic of the sensor element 10 flows. Since this element current corresponding to the sensor alternating-current characteristic becomes larger than the limiting current corresponding to the air-fuel ratio at that time, if the applied voltage control is implemented on the basis of this element current, there is a possibility that an excess voltage application occurs. Also in this situation, the excess current is detected as mentioned above and, hence, the excess voltage application is suppressible. This also applies to the power-on for the re-start of the engine, and in a case in which the engine of a vehicle is re-started immediately after the operation is stopped, the power supply is made in a state where the element temperature is high and the rapid voltage variation occurs so that a similar situation appears. In this case, the excess current is detected as mentioned above, thus suppressing the excess voltage application.

In this connection, since the LPF 38 is provided in the applied voltage control circuit 30, also when the over-current monitoring circuit 40 is released from operation (that is, the switch 45 is changed over), the rapid applied voltage variation is suppressible.

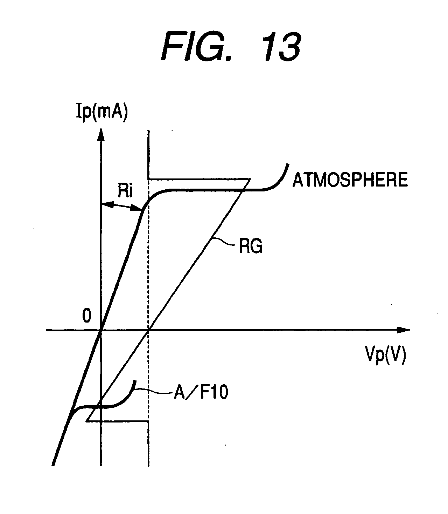

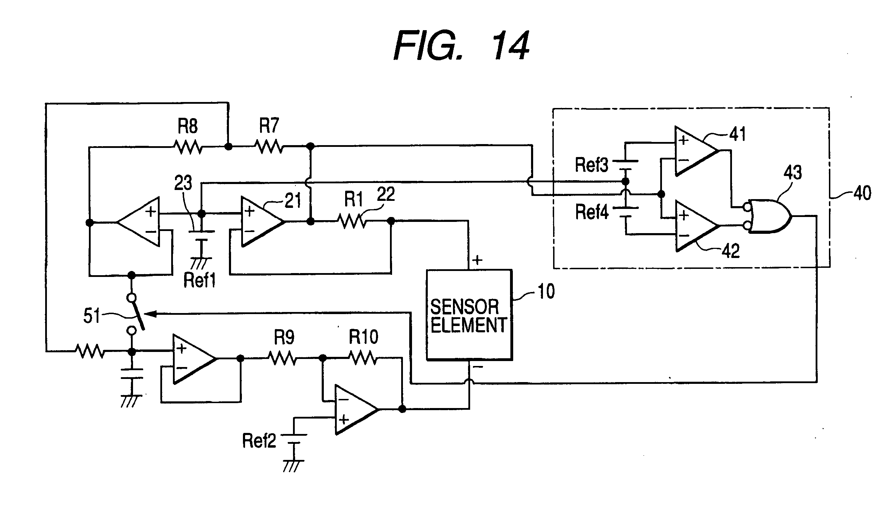

In FIG. 13, the applied voltage is fixed in a region outside the air-fuel ratio detection range (A/F10 to atmosphere). In this case, even if an excess current flows in the sensor element 10, the voltage is merely applied in the resistance governing region, and the voltage is applied in the safe side region. FIG. 14 shows a circuit arrangement for setting the applied voltage line RG shown in FIG. 13.

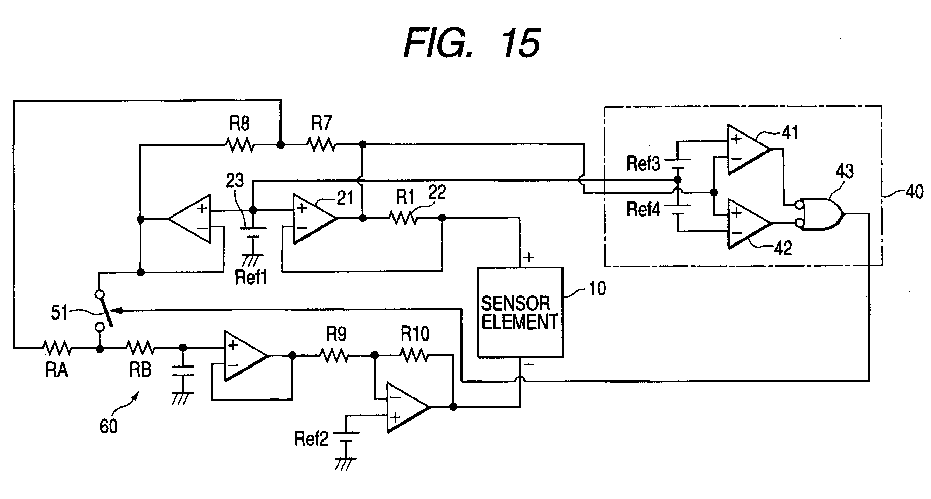

In FIG. 14, an over-current monitoring circuit 40 is for monitoring an excess current through the use of a voltage (that is, A/F output) at the point B in the illustration as mentioned above with reference to FIG. 12, and a switch 51 is turned on/off in accordance with the output of the over-current monitoring circuit 40. Thus, in a case in which an excess current flows outside the air-fuel ratio detection range (A/F10 to atmosphere), the applied voltage is fixed at 2 × (Ref1 - Ref2) (in the case of R9 = R10, the applied voltage is calculated according to the aforesaid equation). In the case of the detection of an excess current, this corresponds to that the applied voltage characteristic is changed to a voltage limiting applied voltage characteristic for suppressing an excess voltage application to the sensor element 10. As mentioned above, although the applied voltage characteristic is changed through the switching operation of the switch 51 at the detection of an excess current, if the applied voltage characteristic is thoughtlessly changed when the element current varies instantaneously due to noise, temporary short-circuit, grounding or the like, because of the rapid change from the limiting current region to the resistance governing region or the like, the applied voltage rapidly varies so that there is a possibility that the air-fuel ratio detection accuracy lowers. For this reason, the timing of the change of the applied voltage characteristic is delayed at the detection of an excess current. Concretely, for example, as shown in FIG. 15, an LPF 60 is provided in an signal outputting portion of the over-current monitoring circuit 40. Owing to this, the applied voltage characteristic is not changed by an instantaneous (extremely short time) element current variation, and as a result, the air-fuel ratio detection accuracy is maintainable. When a timer (delay circuit) is used in place of the LPF 60, it is also possible to inhibit the switch 51 from turning on for a given time. The inhibition of the turning-on of the switch 51 for a given time suppresses the rapid applied voltage variation against instantaneous noise.

In this connection, the applied voltage line RG shown in FIG. 13 is also realizable by setting the resistance value R6 of the resistor 46 at 0Ω in the circuit shown in FIG. 12.

In addition to setting the applied voltage characteristic as shown in FIGs. 11 and 13, it is also possible to employ an arrangement whereby the inclination of the applied voltage line RG is directly increased from an end point of the applied voltage line RG in the exterior of the air-fuel ration detection range or it is made to stand upright.

It should be understood that the present invention is not limited to the above-described embodiments, and that it is intended to cover all changes and modifications of the embodiments of the invention herein which do not constitute departures from the spirit and scope of the invention.

For example, since the characteristic of the sensor element 10 varies with time, it is appropriate that the applied voltage characteristic is defined in advance in consideration of this variation with time. That is, according to the deterioration of the sensor element 10, the direct-current internal resistance Ri increases while the inclination of the resistance governing region becomes smaller. Moreover, the frequency characteristic of the sensor element 10 varies (the frequency characteristic varies, for example, due to the fact that the capacitor portion decreases in the interior of the sensor). In this case, the initial output characteristic of the sensor element 10 and an estimated output characteristic after the variation with time are used and the applied voltage line RG is set to pass through a region in which the limiting current regions thereof overlap. the estimated output characteristic after the variation with time is estimated in consideration of a variation of the direct-current internal resistance Ri or frequency characteristic at the deterioration tolerance limits permitting the use of the element current output. In this arrangement, proper applied voltage control is feasible even after the variation with time, and the air-fuel ration detection accuracy is maintainable over a long period of time. Naturally, since there is a difference among the sensors themselves, it is preferable to consider this fact. In setting the applied voltage line in consideration of the initial characteristic and the deterioration characteristic, an important thing is that a suppressing means is appropriately set to prevent the oscillation of the applied voltage. Moreover, because the sensor frequency characteristic also varies, there is a need to consider this fact sufficiently.

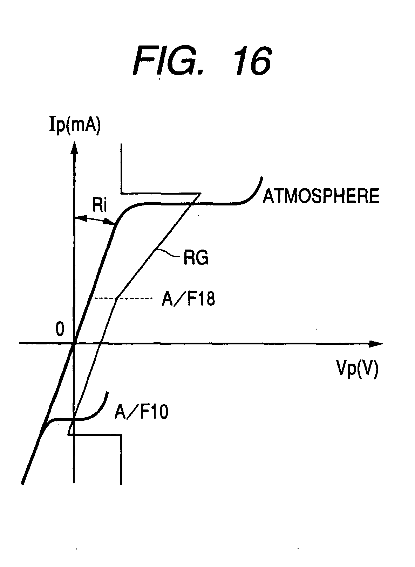

It is also considered that a region in which limiting current region widths are approximately equal to each other and a region in which limiting current regions are different from each other exist in the air-fuel ratio detection range. For example, it is considered that, in a region from rich to vicinity of a stoichiometoric air-fuel ratio, the widths of the limiting current regions are approximately equal to each other and in a region from the vicinity of the stoichiometric air-fuel ratio to extreme lean (atmosphere), the limiting current region width increases gradually. In this case, for example, as shown in FIG. 16, the inclination (applied voltage characteristic) of the applied voltage line RG changes partially according to air-fuel ratio region. In FIG. 16, with respect to A/F18, in the rich side, the applied voltage line RG is set in parallel with the inclination (inclination of the resistance governing region) according to the direct-current internal resistance Ri of the sensor element 10 and, in a lean side, it is set in a lying state.

In addition, it is also possible that the air-fuel ratio detection range is divided into a plurality of portions and the inclination of the applied voltage line RG is individually set in each of the divided detection range portions. In this case, the upper limit or one point in the vicinity of the upper limit on the limiting current region is specified for each detection range portion, and the lower limit or one point in the vicinity of the lower limit on the limiting current region is specified for each detection range portion, with the applied voltage line RG being set to pass through the specified points. The method of setting the applied voltage line RG in each detection range portion is, for example, as described above with reference to FIG. 6. In a case in which the entire air-fuel ratio detection range from A/F10 to the atmosphere is divided into three regions, it is divided into three regions of A/F10 to stoichiometric air-fuel ratio, stoichiometric air-fuel ratio to A/F18 and A/F18 to atmosphere, and the applied voltage line only for each of the respective regions are set and they are connected to establish one applied voltage line RG. Alternatively, it is divided into three regions of A/F10 to A/F12, A/F12 to A/F18 and A/F18 to atmosphere, and the applied voltage line only for each of the respective regions are set and they are connected to establish one applied voltage line RG. Since the region (A/F12 to A/F18) in the vicinity of the stoichiometric air-fuel ratio is divided to set the ranges, in particular, the stoichiometric combustion is securable. Naturally, the division method can arbitrarily be determined. According to this method, the applied voltage control accuracy is further improvable.

In the above-described embodiment, although the applied voltage control circuit 30 is made to feedback-control the applied voltage, it is also appropriate that an applied voltage command value is outputted from a microcomputer or the like so that the applied voltage control is implemented in accordance with the command value. Also in this case, the applied voltage value may be determined in each case in consideration of the width of the limiting current region. For example, a microcomputer implements the following applied voltage control (1) and (2).
(1) The applied voltage to the sensor element is controlled between a voltage point at which an electromotive force output striking a balance with an applied voltage in the case of increasing the applied voltage starts and a voltage point at which the decomposition of water contained in a detection gas starts. In this case, of a voltage range in which the element current becomes approximately constant with respect to the applied voltage in the sensor output characteristic, a voltage range except a voltage range in which the water contained in a detection gas is decomposed may be set as a limiting current region. In this arrangement, the element current is detectable in a region which does not include a water decomposition region, thereby improving the detection accuracy.
(2) The applied voltage is controlled in a region in which limiting current regions overlap in a plurality of sensor output characteristics different in temperature condition of the sensor element 10 from each other. In this case, a minimum-temperature output characteristic and a maximum-temperature output characteristic within a temperature range actually available in the using environment of the sensor element 10 are employed, and the applied voltage is controlled in a region in which the limiting current regions thereof overlap. According to this arrangement, the applied voltage is always controllable without getting out of the limiting current region irrespective of the variation of the element temperature.

In addition, when the applied voltage line RG to be set on the V-I coordinates is one in number, an advantage is obtainable in cost. However, the present invention is not limited to this, but it is also possible to set a plurality of applied voltage lines.

A configuration other than the LPF 38 is also usable as the voltage change regulating means. In short, it is appropriate that the gain of the applied voltage control circuit 30 is set to be below 1.

In the above description, although the embodiments employ the A/F sensor having the sensor element construction shown in FIG. 2, it is also possible to employ an A/F sensor having another sensor element construction. For example, without being limited to the construction having a one-layer solid electrolyte member, the present invention is also applicable to an A/F sensor having two-layer or three-layer solid electrolyte construction, and without being limited to the A/F sensor having a multilayer construction, the present invention is also applicable to an A/F sensor having a cup-like construction.

For example, as a two-cell type A/F sensor, there has been known a sensor having an oxygen pump cell and an oxygen sensing cell. In this A/F sensor, an exhaust gas is introduced through a gas passage into a measured gas chamber and the oxygen pump cell outputs a current corresponding to an oxygen concentration in the measured gas chamber, thus detecting the oxygen concentration of the exhaust gas. Moreover, the oxygen sensing cell generates an electromotive force corresponding to the oxygen concentration of the exhaust gas introduced into the measured gas chamber, and the applied voltage to the oxygen pump cell is controlled so that the electromotive force becomes constant. In the A/F sensor having the aforesaid construction, in general, the pump cell current is controlled so as to maintain the electromotive force of the oxygen sensing cell at 0.45V. However, since the widths of the limiting current regions (flat regions) stand at different values according to A/F as mentioned above, the electromotive force of the oxygen sensing cell may be changed according to A/F region. Concretely, the electromotive force of the oxygen sensing cell serving as a control voltage is changed within a range of approximately 0.45V ± 0.1V. This achieves the improvement of the air-fuel ratio detection accuracy.

Moreover, the present invention is also applicable to other than the A/F sensors for detecting the oxygen concentration, i.e., a gas concentration sensor for detecting other gas concentrations. For example, a compound gas concentration sensor includes a plurality of cells made from a solid electrolyte, and of these cells, a first cell (pump cell) discharges or pumps out oxygen in a detection gas and detects the oxygen concentration and a second cell (sensor cell) detects a gas concentration of a specific component in the gas after the oxygen discharge. This gas concentration sensor is actually used, for example, as an NOx sensor for detecting an NOx concentration in an exhaust gas, and when the present invention is applied thereto, the NOx concentration detection accuracy is improvable. Moreover, the present invention is also applicable to a gas concentration sensor having a plurality of cells including, in addition to the aforesaid first and second cells, a third cell (monitor cell, or second pump cell) for detecting a residual oxygen concentration after the oxygen discharge. In this case, the applied voltage characteristic of the pump cell may be set as mentioned above to implement the applied voltage control through the use of this applied voltage characteristic.

In addition to the NOx concentration detectable gas concentration sensor, the present invention is also applicable to a gas concentration sensor which can detect an HC concentration or a CO concentration as a gas concentration of a specific component. In this case, the excess oxygen of a detection gas is discharged by a pump cell and HC or CO in the gas after the excess oxygen discharge is decomposed by a sensor cell to detect an HC concentration or a CO concentration. Moreover, when the present invention is used for a gas concentration detecting apparatus other than for vehicles, a gas other than the exhaust gas becomes a detection gas.

The present invention relates to a gas concentration detecting apparatus capable of implementing applied voltage to a gas sensor element with high accuracy to improve the gas concentration detection accuracy over a wide range. The sensor element of the gas concentration detecting apparatus acting as an air-fuel ratio sensor is composed of a gas diffusion rate-determining portion, a solid electrolyte and a pair of electrodes, and an element current corresponding to a specific component concentration flows whenever a voltage is applied to the sensor element. An applied voltage control circuit controls the applied voltage to the sensor element on the basis of an applied voltage characteristic defined linearly. The applied voltage characteristic is set on the basis of a width of a limiting current region at each air-fuel ratio in a wide air-fuel ratio detection range.

## Claims

1. A gas concentration detecting apparatus for use in a limit-current type gas concentration sensor comprising a sensor element including a solid electrolyte and a pair of electrodes placed on said solid electrolyte so that an element current flows in corresponding relation to a specific component concentration whenever a voltage is applied to said sensor element, with the applied voltage being controlled on the basis of an applied voltage characteristic defined linearly and said specific component concentration in a gas to be detected being detected in a wide range on the basis of an output of said element current, said applied voltage characteristic being set on the basis of a width of a limiting current region on each concentration level in a gas concentration detection range.

2. A gas concentration detecting apparatus for use in a limit-current type gas concentration sensor having a sensor element including a solid electrolyte and a pair of electrodes placed on said solid electrolyte so that an element current flows in corresponding relation to a specific component concentration whenever a voltage is applied to said sensor element, said apparatus comprising:
an applied voltage control unit connected to said electrodes of said sensor element for controlling the applied voltage on the basis of an applied voltage characteristic defined linearly; and
an element current detecting unit connected to said electrodes of said sensor element for detecting an element current output corresponding to a specific component concentration in a gas to be detected in a gas concentration detection range set widely,
said applied voltage characteristic being set on the basis of a width of a limiting current region on each concentration level in said gas concentration detection range.

3. The apparatus according to claim 1, wherein an upper limit or one point on said limiting current region in the vicinity of said upper limit in said gas concentration detection range is specified and a lower limit or one point on said limiting current region in the vicinity of said lower limit in said gas concentration detection range is specified, with an applied voltage line being set as said applied voltage characteristic to pass through said points specified.

4. The apparatus according to claim 2, wherein an upper limit or one point on said limiting current region in the vicinity of said upper limit in said gas concentration detection range is specified and a lower limit or one point on said limiting current region in the vicinity of said lower limit in said gas concentration detection range is specified, with an applied voltage line being set as said applied voltage characteristic to pass through said points specified.

5. The apparatus according to claim 1, wherein said gas concentration detection range is divided into a plurality of portions, and an upper limit or one point on said limiting current region in the vicinity of the upper limit in each detection range portion is specified and a lower limit or one point on said limiting current region in the vicinity of the lower limit in each detection range portion is specified, with an applied voltage line serving as said applied voltage characteristic being set to pass through said points specified.

6. The apparatus according to claim 2, wherein said gas concentration detection range is divided into a plurality of portions, and an upper limit or one point on said limiting current region in the vicinity of the upper limit in each detection range portion is specified and a lower limit or one point on said limiting current region in the vicinity of the lower limit in each detection range portion is specified, with an applied voltage line serving as said applied voltage characteristic being set to pass through said points specified.

7. The apparatus according to claim 1, wherein said limiting current region is determined on the condition that a variation of said element current is below a predetermined quantity, and said applied voltage characteristic is set to pass through an intermediate point of said limiting current region.

8. The apparatus according to claim 2, wherein said limiting current region is determined on the condition that a variation of said element current is below a predetermined quantity, and said applied voltage characteristic is set to pass through an intermediate point of said limiting current region.

9. The apparatus according to claim 1, wherein, when said applied voltage to said sensor element is increased, said limiting current region is set between a first voltage point at which an output of an electromotive force coming into a balance with said applied voltage starts and a second voltage point at which a decomposition of water contained in said gas to be detected starts.

10. The apparatus according to claim 2, wherein, when said applied voltage to said sensor element is increased, said limiting current region is set between a first voltage point at which an output of an electromotive force coming into a balance with said applied voltage starts and a second voltage point at which a decomposition of water contained in said gas to be detected starts.

11. The apparatus according to claim 1, wherein said apparatus is made to detect a specific component concentration in an exhaust gas emitted from a combustion engine, and said limiting current region is set between a first voltage point at which, when said applied voltage to said sensor element is increased, an output of an electromotive force coming into balance with said applied voltage starts and a second voltage point at which said element current increases due to the residue of a reaction-hard component of unburned components contained in said gas to be detected.

12. The apparatus according to claim 2, wherein said apparatus is made to detect a specific component concentration in an exhaust gas emitted from a combustion engine, and said limiting current region is set between a first voltage point at which, when said applied voltage to said sensor element is increased, an output of an electromotive force coming into balance with said applied voltage starts and a second voltage point at which said element current increases due to the residue of a reaction-hard component of unburned components contained in said gas to be detected.

13. The apparatus according to claim 11, wherein an intermediate point between said first and second voltage points is specified to set an applied voltage line as said applied voltage characteristic.

14. The apparatus according to claim 12, wherein an intermediate point between said first and second voltage points is specified to set an applied voltage line as said applied voltage characteristic.

15. The apparatus according to claim 1, wherein, in a voltage range in which said element current becomes approximately constant with respect to said applied voltage in a sensor output characteristic, a voltage range except a voltage range in which water contained in said gas to be detected is decomposed is set as said limiting current region.

16. The apparatus according to claim 2, wherein, in a voltage range in which said element current becomes approximately constant with respect to said applied voltage in a sensor output characteristic, a voltage range except a voltage range in which water contained in said gas to be detected is decomposed is set as said limiting current region.

17. The apparatus according to claim 1, wherein, on voltage-current (V-I) coordinates representing the relationship between said applied voltage and said element current therein, an inclination (I/V) of an applied voltage line serving as said applied voltage characteristic is made smaller than an inclination (I/V) of a resistance governing region determined in accordance with a direct-current internal resistance of said sensor element.

18. The apparatus according to claim 2, wherein, on voltage-current (V-I) coordinates representing the relationship between said applied voltage and said element current therein, an inclination (I/V) of an applied voltage line serving as said applied voltage characteristic is made smaller than an inclination (I/V) of a resistance governing region determined in accordance with a direct-current internal resistance of said sensor element.

19. The apparatus according to claim 1, wherein different applied voltage characteristics are set in a gas concentration detection range in which widths of limiting current regions are approximately equal to each other and in a gas concentration detection range in which widths of limiting current regions are different from each other.

20. The apparatus according to claim 1, wherein different applied voltage characteristics are set in a gas concentration detection range in which widths of limiting current regions are approximately equal to each other and in a gas concentration detection range in which widths of limiting current regions are different from each other.

21. The apparatus according to claim 1, wherein, in a plurality of sensor output characteristics whose temperature conditions of the sensor element differ from each other, an applied voltage line is set to pass through a region in which limiting current regions overlap.

22. The apparatus according to claim 2, wherein, in a plurality of sensor output characteristics whose temperature conditions of the sensor element differ from each other, an applied voltage line is set to pass through a region in which limiting current regions overlap.

23. The apparatus according to claim 21, wherein an output characteristic at a minimum temperature in a temperature range actually attainable in a using environment of said sensor element and an output characteristic at a maximum temperature therein are employed so that said applied voltage line is set to pass through a region in which limiting currents of said output characteristics overlap.

24. The apparatus according to claim 22, wherein an output characteristic at a minimum temperature in a temperature range actually attainable in a using environment of said sensor element and an output characteristic at a maximum temperature therein are employed so that said applied voltage line is set to pass through a region in which limiting currents of said output characteristics overlap.

25. The apparatus according to claim 1, wherein an initial output characteristic of said sensor element and an estimated output characteristic thereof after variation with time are used so that an applied voltage line is set to pass through a region in which limiting current regions of said output characteristics overlap.

26. The apparatus according to claim 2, wherein an initial output characteristic of said sensor element and an estimated output characteristic thereof after variation with time are used so that an applied voltage line is set to pass through a region in which limiting current regions of said output characteristics overlap.

27. The apparatus according to claim 25, wherein said estimated output characteristic after the variation with time is an estimated output characteristic at a deterioration tolerance limit permitting the use of an output of said element current.

28. The apparatus according to claim 26, wherein said estimated output characteristic after the variation with time is an estimated output characteristic at a deterioration tolerance limit permitting the use of an output of said element current.

29. The apparatus according to claim 1, wherein a sensor characteristic line and an applied voltage line are set so as not to intersect with each other in a region outside a gas concentration detection range defined in advance.

30. The apparatus according to claim 2, wherein a sensor characteristic line and an applied voltage line are set so as not to intersect with each other in a region outside a gas concentration detection range defined in advance.

31. The apparatus according to claim 1, wherein excess current detecting means is provided to detect that said element current is outside a range defined in advance, and said applied voltage characteristic is changed when said excess current detecting means detects said element current in the exterior of the defined range.

32. The apparatus according to claim 2, further comprising excess current detecting means for detecting that said element current is outside a range defined in advance so that said applied voltage characteristic is changed when said excess current detecting means detects said element current in the exterior of the defined range.

33. The apparatus according to claim 31, wherein, when said excess current detecting means detects that said element current is outside the defined range, said applied voltage characteristic is made to be changed to a voltage limiting applied voltage characteristic for suppressing excess voltage application to said sensor element, while a timing of the change of said applied voltage characteristic is delayed at the detection of said element current outside the defined range.

34. The apparatus according to claim 32, wherein, when said excess current detecting means detects that said element current is outside the defined range, said applied voltage characteristic is made to be changed to a voltage limiting applied voltage characteristic for suppressing excess voltage application to said sensor element, while a timing of the change of said applied voltage characteristic is delayed at the detection of said element current outside the defined range.

35. The apparatus according to claim 1, wherein an applied voltage control circuit made to feedback-control the applied voltage on the basis of said element current controls the applied voltage on the basis of the set applied voltage characteristic.

36. The apparatus according to claim 2, further comprising an applied voltage control circuit made to feedback-control the applied voltage on the basis of said element current, said applied voltage control circuit controlling the applied voltage on the basis of the set applied voltage characteristic.

37. The apparatus according to claim 35, wherein said applied voltage control circuit includes voltage change regulating means for regulating a change of the applied voltage.

38. The apparatus according to claim 36, wherein said applied voltage control circuit includes voltage change regulating means for regulating a change of the applied voltage.

39. A gas concentration detecting apparatus for use in a limit-current type gas concentration sensor comprising a sensor element including a solid electrolyte and a pair of electrodes placed on said solid electrolyte so that an element current flows in corresponding relation to a specific component concentration whenever a voltage is applied to said sensor element, with the applied voltage being controlled on the basis of an applied voltage characteristic defined linearly and said specific component concentration in a gas to be detected being detected in a wide range on the basis of an output of said element current, and in a predetermined concentration range, a low-voltage side characteristic defined by connecting low-voltage side end points of limiting current regions on concentration levels and a high-voltage side characteristic defined by connecting high-voltage side end points of the same limiting current regions thereon are defined so that said applied voltage characteristic is set on the basis of an intermediate inclination between the inclinations of said low-voltage and high-voltage side characteristics.

40. A gas concentration detecting apparatus for use in a limit-current type gas concentration sensor having a sensor element including a solid electrolyte and a pair of electrodes placed on said solid electrolyte so that an element current flows in corresponding relation to a specific component concentration whenever a voltage is applied to said sensor element, said apparatus comprising:
an applied voltage control unit connected to said electrodes of said sensor element for controlling the applied voltage on the basis of an applied voltage characteristic defined linearly; and
an element current detecting unit connected to said electrodes of said sensor element for detecting an element current output corresponding to a specific component concentration in a gas to be detected in a gas concentration detection range set widely,
in said applied voltage control unit, a low-voltage side characteristic defined by connecting low-voltage side end points of limiting current regions on concentration levels and a high-voltage side characteristic defined by connecting high-voltage side end points of the same limiting current regions thereon are defined in a predetermined concentration range so that said applied voltage characteristic is set on the basis of an intermediate inclination between the inclinations of said low-voltage and high-voltage side characteristics.

41. The apparatus according to claim 39, wherein said low-voltage side characteristic is defined by a voltage point at which, when the applied voltage to said sensor element is increased, an output of an electromotive force coming into balance with respect to the applied voltage starts, while said high-voltage side characteristic is defined by a voltage point at which decomposition of water contained in said gas to be detected starts.

42. The apparatus according to claim 40, wherein said low-voltage side characteristic is defined by a voltage point at which, when the applied voltage to said sensor element is increased, an output of an electromotive force coming into balance with respect to the applied voltage starts, while said high-voltage side characteristic is defined by a voltage point at which decomposition of water contained in said gas to be detected starts.

43. The apparatus according to claim 39, wherein the apparatus is a gas concentration detecting apparatus which is made to detect a specific component concentration of an exhaust gas emitted from a combustion engine, and said low-voltage side characteristic is defined by a voltage point at which, when the applied voltage to said sensor element is increased, an output of an electromotive force coming into balance with respect to the applied voltage starts, while said high-voltage side characteristic is defined by a voltage point at which said element current increases due to the residue of a reaction-hard component of unburned components contained in said gas to be detected.

44. The apparatus according to claim 40, wherein the apparatus is a gas concentration detecting apparatus which is made to detect a specific component concentration of an exhaust gas emitted from a combustion engine, and said low-voltage side characteristic is defined by a voltage point at which, when the applied voltage to said sensor element is increased, an output of an electromotive force coming into balance with respect to the applied voltage starts, while said high-voltage side characteristic is defined by a voltage point at which said element current increases due to the residue of a reaction-hard component of unburned components contained in said gas to be detected.

45. A gas concentration detecting apparatus for use in a limit-current type gas concentration sensor comprising a sensor element including a solid electrolyte and a pair of electrodes placed on said solid electrolyte so that an element current flows in corresponding relation to a specific component concentration whenever a voltage is applied to said sensor element, with the applied voltage being controlled on the basis of an applied voltage characteristic defined in advance and said specific component concentration in a gas to be detected being detected in a wide range on the basis of an output of said element current,
the applied voltage to said sensor element is controlled between a voltage point at which, when the applied voltage to said sensor element is increased, an output of an electromotive force coming into balance with respect to the applied voltage starts and a voltage point at which decomposition of water contained in a gas to be detected starts.

46. A gas concentration detecting apparatus for use in a limit-current type gas concentration sensor comprising a sensor element including a solid electrolyte and a pair of electrodes placed on said solid electrolyte so that an element current flows in corresponding relation to a specific component concentration whenever a voltage is applied to said sensor element, with the applied voltage being controlled on the basis of an applied voltage characteristic defined in advance and said specific component concentration in a gas to be detected being detected in a wide range on the basis of an output of said element current,
of a voltage range in which said element current becomes approximately constant with respect to the applied voltage in a sensor output characteristic, a voltage range excluding a voltage range in which water contained in a gas to be detected is decomposed is set as a limiting current region, and the applied voltage is controlled in said limiting current region.

47. A gas concentration detecting apparatus for use in a limit-current type gas concentration sensor comprising a sensor element including a solid electrolyte and a pair of electrodes placed on said solid electrolyte so that an element current flows in corresponding relation to a specific component concentration whenever a voltage is applied to said sensor element, with the applied voltage being controlled on the basis of an applied voltage characteristic defined in advance and said specific component concentration in a gas to be detected being detected in a wide range on the basis of an output of said element current,
the applied voltage is controlled in a region in which limiting current regions overlap in a plurality of sensor output characteristics different in temperature condition of the sensor element from each other.

48. The apparatus according to claim 47, wherein an output characteristic at a minimum temperature in a temperature range actually attainable in a using environment of said sensor element and an output characteristic at a maximum temperature therein are employed so that the applied voltage is controlled in a region in which limiting currents of said output characteristics overlap.

49. A gas concentration detecting apparatus for use in a limit-current type gas concentration sensor comprising a sensor element including a solid electrolyte and a pair of electrodes placed on said solid electrolyte so that an element current flows in corresponding relation to a specific component concentration whenever a voltage is applied to said sensor element, with the applied voltage being controlled on the basis of an applied voltage characteristic defined in advance and said specific component concentration in a gas to be detected being detected in a wide range on the basis of an output of said element current,
an initial output characteristic of said sensor element and an estimated output characteristic thereof after variation with time are used so that the applied voltage is controlled in a region in which limiting current regions of said output characteristics overlap.

50. The apparatus according to claim 49, wherein
said estimated output characteristic after the variation with time is an estimated output characteristic at a deterioration tolerance limit permitting the use of an output of said element current.

51. The apparatus according to claim 1, wherein said apparatus is made to detect an air-fuel ratio on the basis of an oxygen concentration in an exhaust gas emitted from a combustion engine, and a lean side limit of an air-fuel ratio detection range is set at A/F20 or more.

52. The apparatus according to claim 2, wherein said apparatus is made to detect an air-fuel ratio on the basis of an oxygen concentration in an exhaust gas emitted from a combustion engine, and a lean side limit of an air-fuel ratio detection range is set at A/F20 or more.

53. The apparatus according to claim 39, wherein said apparatus is made to detect an air-fuel ratio on the basis of an oxygen concentration in an exhaust gas emitted from a combustion engine, and a lean side limit of an air-fuel ratio detection range is set at A/F20 or more.

54. The apparatus according to claim 40, wherein said apparatus is made to detect an air-fuel ratio on the basis of an oxygen concentration in an exhaust gas emitted from a combustion engine, and a lean side limit of an air-fuel ratio detection range is set at A/F20 or more.

55. The apparatus according to claim 45, wherein said apparatus is made to detect an air-fuel ratio on the basis of an oxygen concentration in an exhaust gas emitted from a combustion engine, and a lean side limit of an air-fuel ratio detection range is set at A/F20 or more.

56. The apparatus according to claim 46, wherein said apparatus is made to detect an air-fuel ratio on the basis of an oxygen concentration in an exhaust gas emitted from a combustion engine, and a lean side limit of an air-fuel ratio detection range is set at A/F20 or more.

57. The apparatus according to claim 47, wherein said apparatus is made to detect an air-fuel ratio on the basis of an oxygen concentration in an exhaust gas emitted from a combustion engine, and a lean side limit of an air-fuel ratio detection range is set at A/F20 or more.

58. The apparatus according to claim 49, wherein said apparatus is made to detect an air-fuel ratio on the basis of an oxygen concentration in an exhaust gas emitted from a combustion engine, and a lean side limit of an air-fuel ratio detection range is set at A/F20 or more.

59. The apparatus according to claim 1, wherein said apparatus is made to detect an air-fuel ratio on the basis of an oxygen concentration in an exhaust gas emitted from a combustion engine, and a lean side limit of an air-fuel ratio detection range is set at the atmosphere.

60. The apparatus according to claim 2, wherein said apparatus is made to detect an air-fuel ratio on the basis of an oxygen concentration in an exhaust gas emitted from a combustion engine, and a lean side limit of an air-fuel ratio detection range is set at the atmosphere.

61. The apparatus according to claim 39, wherein said apparatus is made to detect an air-fuel ratio on the basis of an oxygen concentration in an exhaust gas emitted from a combustion engine, and a lean side limit of an air-fuel ratio detection range is set at the atmosphere.

62. The apparatus according to claim 40, wherein said apparatus is made to detect an air-fuel ratio on the basis of an oxygen concentration in an exhaust gas emitted from a combustion engine, and a lean side limit of an air-fuel ratio detection range is set at the atmosphere.

63. The apparatus according to claim 45, wherein said apparatus is made to detect an air-fuel ratio on the basis of an oxygen concentration in an exhaust gas emitted from a combustion engine, and a lean side limit of an air-fuel ratio detection range is set at the atmosphere.

64. The apparatus according to claim 46, wherein said apparatus is made to detect an air-fuel ratio on the basis of an oxygen concentration in an exhaust gas emitted from a combustion engine, and a lean side limit of an air-fuel ratio detection range is set at the atmosphere.

65. The apparatus according to claim 47, wherein said apparatus is made to detect an air-fuel ratio on the basis of an oxygen concentration in an exhaust gas emitted from a combustion engine, and a lean side limit of an air-fuel ratio detection range is set at the atmosphere.

66. The apparatus according to claim 49, wherein said apparatus is made to detect an air-fuel ratio on the basis of an oxygen concentration in an exhaust gas emitted from a combustion engine, and a lean side limit of an air-fuel ratio detection range is set at the atmosphere.

67. The apparatus according to claim 1, wherein said apparatus is made to detect an air-fuel ratio on the basis of an oxygen concentration in an exhaust gas emitted from a combustion engine, and a rich side limit of an air-fuel ratio detection range is set at A/F11 or less.

68. The apparatus according to claim 2, wherein said apparatus is made to detect an air-fuel ratio on the basis of an oxygen concentration in an exhaust gas emitted from a combustion engine, and a rich side limit of an air-fuel ratio detection range is set at A/F11 or less.

69. The apparatus according to claim 39, wherein said apparatus is made to detect an air-fuel ratio on the basis of an oxygen concentration in an exhaust gas emitted from a combustion engine, and a rich side limit of an air-fuel ratio detection range is set at A/F11 or less.

70. The apparatus according to claim 40, wherein said apparatus is made to detect an air-fuel ratio on the basis of an oxygen concentration in an exhaust gas emitted from a combustion engine, and a rich side limit of an air-fuel ratio detection range is set at A/F11 or less.

71. The apparatus according to claim 45, wherein said apparatus is made to detect an air-fuel ratio on the basis of an oxygen concentration in an exhaust gas emitted from a combustion engine, and a rich side limit of an air-fuel ratio detection range is set at A/F11 or less.

72. The apparatus according to claim 46, wherein said apparatus is made to detect an air-fuel ratio on the basis of an oxygen concentration in an exhaust gas emitted from a combustion engine, and a rich side limit of an air-fuel ratio detection range is set at A/F11 or less.

73. The apparatus according to claim 47, wherein said apparatus is made to detect an air-fuel ratio on the basis of an oxygen concentration in an exhaust gas emitted from a combustion engine, and a rich side limit of an air-fuel ratio detection range is set at A/F11 or less.

74. The apparatus according to claim 49, wherein said apparatus is made to detect an air-fuel ratio on the basis of an oxygen concentration in an exhaust gas emitted from a combustion engine, and a rich side limit of an air-fuel ratio detection range is set at A/F11 or less.
